# EUROPÄISCHE PATENTSCHRIFT

(11) **EP 2 932 584 B1**
(45) Veröffentlichungstag und Bekanntmachung des Hinweises auf die Patenterteilung: **26.09.2018**
(21) Anmeldenummer: 13811425.1
(22) Anmeldetag: 16.12.2013
(51) Int. Cl.: H02K 11/25, H02K 11/00, H01H 37/76

(54) **ELEKTROMOTOR MIT THERMOSICHERUNG**
ELECTRIC MOTOR COMPRISING A THERMAL FUSE
MOTEUR ÉLECTRIQUE DOTÉ D'UN FUSIBLE THERMIQUE

(30) Priorität: 15.12.2012 DE 102012024604; 07.02.2013 DE 102013002155
(43) Veröffentlichungstag der Anmeldung: 21.10.2015
(73) Patentinhaber: Brose Fahrzeugteile GmbH & Co. Kommanditgesellschaft, Würzburg, 97076 Würzburg (DE)
(72) Erfinder: ZICK, Stefan, 97332 Volkach (DE); EHRMANN, Steffen, 97239 Aub (DE)
(74) Vertreter: FDST Patentanwälte
(86) Internationale Anmeldenummer: PCT/EP2013/076638
(87) Internationale Veröffentlichungsnummer: WO 2014/091026

(56) Entgegenhaltungen:
- WO-A1-02/21555
- DE-A1- 19 800 234
- DE-A1-102009 046 489
- US-A1- 2008 117 016

## Beschreibung

Die Erfindung betrifft einen Elektromotor, insbesondere bürstenlosen Elektromotor zum Antrieb einer Kraftfahrzeugkomponente, gemäß dem Oberbegriff des Anspruchs 1, mit einem gegenüber einem Stator drehbar gelagerten Rotor und mit einer Elektronik, die ein mit einer Kunststoffumspritzung versehenes Stanzgitter mit einer den Motorstrom führenden Strombahn mit zwei zueinander beabstandeten Strombahnenden aufweist, die eine mittels einer Thermosicherung mit federbelasteter Kontaktbrücke gebrückte Unterbrechungsstelle bilden. Unter Kraftfahrzeugkomponente wird insbesondere ein Lüfterrad zur Kühlwasserkühlung verstanden.

Die DE 20 2010 002 664 U1 offenbart einen Elektromotor, insbesondere Gleichstrommotor, zum Antrieb einer Kraftfahrzeugkomponente, insbesondere Lüftermotor zur Kühlwasserkühlung, mit einem Rotor und einem Kommutator, an dem eine Bürste kontaktierend anliegt. Ein kunststoffumspritztes Stanzgitter bildet eine in eine elektrische Isolierung eingeprägte Strombahn, die mit einer Bürste verbunden ist. Die Strombahn, welche den Motorstrom führt, ist unter Bildung von zwei zueinander beabstandeten Strombahnenden unterbrochen und die Unterbrechungsstelle ist mit einer Kontaktfeder als Thermosicherung gebrückt.

Die DE 10 2009 036 578 B3 betrifft eine Thermosicherung, insbesondere für ein Leistungsmodul eines Kraftfahrzeugs, mit einer Leiterbahn, die auf einer Platine angeordnet und durch eine Unterbrechungsstelle unterbrochen ist, und die jeweils benachbart zu der Unterbrechungsstelle einen ersten Leiterbahnabschnitt und einen zweiten Leiterbahnabschnitt aufweist. Eine Kontaktbrücke, die im Bereich der Unterbrechungsstelle angeordnet ist, weist einander gegenüberliegend einen ersten Kontaktabschnitt und einen zweiten Kontaktabschnitt auf. Die Kontaktabschnitte sind in einer ersten Position an den Leiterbahnabschnitten mittels Lot an Lötstellen befestigt. Die Kontaktbrücke ist in der ersten Kontaktposition mittels Federkraft beaufschlagt, derart, dass bei Erreichen des Schmelzpunktes des Lots die Kontaktabschnitte von den korrespondierenden Leiterbahnabschnitten getrennt werden. Ferner weist die Thermosicherung ein Federelement auf, das bei Erreichen des Schmelzpunktes des Lots eine Bewegung der Kontaktbrücke bewirkt, welche parallel zur Platine verläuft. In der zweiten oder Auslöseposition ist die Kontaktbrücke in einem Käfig gehalten, ohne den ersten Leiterbahnabschnitt zu kontaktiert.

Aus der WO 2002/21555 A1 ist als Alternative zu einer Schmelzsicherung ein Überlastschutz in beispielhafter Anwendung bei einem Starter eines Verbrennungsmotors offenbart, wobei ein erster Kontakt und ein zweiter Kontakt anstelle eines Dehndrahtes mittels Lot miteinander verbunden (kontaktiert) werden. Im Auslösefall schmilzt das Lot aufgrund eines Überstroms und/oder im Falle erhöhter Umgebungstemperatur auf und trennt die Kontaktstelle unter Freigabe einer Unterbrechungsstrecke sowie unter Verschwenken zumindest eines der beiden Kontakte um eine Schwenkachse in Folge einer Federrückstellkraft, wobei die Unterbrechungsstelle erst im Zuge des Verschwenkens des entsprechenden Kontaktes entsteht.

Aus der DE 198 00 234 A1 ist ein bürstenloser Elektromotor mit einer Steuerkreisplatte mit einer darauf angeordneten Thermosicherung bekannt, welche zwei Kontaktabschnitte im Plus- oder High-Pfad von in einer Brückenschaltung (H6-Schaltung) verschalteten Leistungstransistoren brückt. Hierzu ist ein im Kontaktzustand bezogen auf eine Unterbrechungsstelle konvex gebogenes Federelement vorgesehen, das einseitig mechanisch in der Leiterplatte fixiert und am Auslöseende mit dem entsprechenden Leiterbahnkontakt mittels Lot mechanisch und elektrisch verbunden ist. Im Auslösefall verschwenkt die selbstfedernde Federelement um eine Schwenkachse innerhalb der Ebene der Unterbrechungsstelle. Eine solche Schutzeinrichtung innerhalb einer Leiterplatte eines Steuergerätes ist auch aus der DE 10 2009 046 489A1 bekannt.

Aus der US 2008/0117016 A1 ist eine Temperatursicherung bekannt, bei der zwei Kontaktanschlüsse mittels Lot miteinander verbunden werden, wobei gemäß einer Ausführungsform zwischen den beiden Anschlusskontakten eine Unterbrechungsstelle gebildet, die mittels einer Schenkelfeder gebrückt wird, deren einer Schenkel sich an einem der Kontakte abstützt, während der andere Schenkel mit einer Öse versehen ist, die von einem stabförmigen Lotelement durchsetzt und im Montagezustand mit dem anderen Kontaktschenkel elektrisch leitend verbunden ist. Im Auslösefall schmilzt das stabförmige Lotelement auf und der vorgespannte Federschenkel verschwenkt um die Federschenkelverbindungsachse.

Der Erfindung liegt die Aufgabe zugrunde, einen, insbesondere bürstenlosen Elektromotor, zum Antrieb einer Kraftfahrzeugkomponente, insbesondere eines Lüfterrads zur Kühlwasserkühlung mit einer Thermosicherung anzugeben, der einerseits einen geringen Bauteileaufwand benötigt, und bei dem andererseits eine einfache und/oder effektive Anordnung der Bauteile im Fertigungsprozess ermöglicht ist.

Diese Aufgabe wird erfindungsgemäß gelöst durch die Merkmale des Anspruchs 1. Vorteilhafte Ausgestaltungen, Weiterbildungen und Varianten sind Gegenstand der Unteransprüche.

Dazu weist der Elektromotor, einen gegenüber einem Stator drehbar gelagerten Rotor, eine Elektronik mit einem mit einer Kunststoffumspritzung versehenen Stanzgitter, eine den Motorstrom führende Strombahn mit zwei zueinander beabstandeten und eine Unterbrechungsstelle des Stanzgitters bildenden Strombahnenden, sowie eine Thermosicherung mit einer federbelasteten Kontaktbrücke für die Unterbrechungsstelle auf, wobei die Kontaktbrücke zwei Kontaktstellen des Stanzgitters miteinander verbindet und beidendseitig mit dem jeweiligen Strombahnende kontaktierte Kontaktflächen aufweist, von denen mindestens eine Kontaktfläche mit einer Lötverbindung mit der ensprechenden Kontaktstelle des Stanzgitters verbunden ist. Die Kontaktbrücke ist um eine Achse im Bereich einer der Kontaktflächen schwenkbar gehalten, welche senkrecht zu derjenigen Ebene verläuft, in der die Unterbrechungsstelle liegt. Im Auslösefall der Thermosicherung bei einer Übertemperatur schmilzt das Lot und die Kontaktbrücke verschwenkt in Folge einer Federrückstellkraft durch eine kombinierte Rotations- und Scherbewegung in der Ebene der Unterbrechungsstelle, wobei die Kontaktbrücke von einer Kontaktposition in eine Auslöseposition schwenkt und die überbrückte Unterbrechungsstelle unterbrochen wird. Dadurch ist eine platzsparende Anordnungsmöglichkeit der Thermosicherung inklusive der Kontaktbrücke und des Federelementes und Kontaktbrücke ermöglicht.

Gemäß einer zweckmäßigen Weiterbildung ist der Kontaktbrücke ein separates Federelement mit einem ersten Federschenkel und mit einem hierzu zumindest annähernd rechtwinklig verlaufenden zweiten Federschenkel zugeordnet. Damit kann ein konstruktiv einfaches und besonders effektiv wirksames Federelement bereitgestellt werden und dieses in der Anordnung platziert werden.

Gemäß einer bevorzugten Variante gehen die Federschenkel über eine, insbesondere offene, Feder- oder Schenkelöse ineinander über. Dadurch kann die Feder in einer Achse schwenkbar an einem Achselement, beispielsweise einem Zapfen oder dergleichen angeordnet und eine günstige Bauform der Feder hergestellt werden. Im Montagezustand umgibt die Federöse des Federelementes die Schwenkachse koaxial. Damit ist in einfacher sowie zuverlässiger Weise ein gemeinsames Verschwenken des Federelementes bzw. dessen mit der Kontaktbrücke zusammenwirkenden Federschenkels und der Kontaktbrücke um die gleiche Schwenkachse gegeben.

In einer weiteren günstigen Bauform liegt der erste Federschenkel in einem Aufnahmefach der Kunststoffumspritzung ein, während der zweite Federschenkel unter Federvorspannung an der Kontaktbrücke anliegt. Die Federschenkel des Federelementes sind im Ausgangszustand in einem geeigneten Winkel derart gegeneinander gestellt, dass im Einbauzustand die Federschenkel bevorzugt zueinander senkrecht stehen, wenn der zweite Federschenkel an der Kontaktbrücke anliegt. Dadurch wird die Vorspannung der Kontaktbrücke mittels des Federelementes auf einfache sowie zuverlässige Art und Weise erzeugt. Geeigneterweise ist das separate Federelement aus Rund- oder Flachdraht nach Art einer Schenkelfeder gefertigt. Damit ist eine kostengünstige Möglichkeit gegeben, das Federelement herzustellen.

Gemäß einer zweckmäßigen Weiterbildung sind das Federelement und die Kontaktbrücke über ein Führungselement gekoppelt. Somit ist die Kontaktbrücke zuverlässig geführt, während diese den Schwenkweg durchfährt. Geeigneterweise ist hierzu das Führungselement durch eine Nut im ersten Federschenkel und eine Feder an der Kontaktbrücke gebildet. Dadurch ist eine günstige und praktikable Umsetzung des Führungselementes gegeben, welche auch eine einfache Handhabung in der Zusammenführung der Bauteile ermöglicht.

Gemäß einer geeigneten Ausgestaltung ist der erste Federschenkel des Federelementes schenkelseitig abgekröpft. Dadurch ist ein stabiler Halt des Federelementes an der Kontaktbrücke gegeben.

In einer weiteren vorteilhaften Ausführungsform ist die Schwenkachse in Form eines Zapfens aus der Kunststoffumspritzung ausgeformt. Dadurch ist konstruktiv die Gegebenheit geschaffen, dass das Federelement im Gegensatz zur Kontaktbrücke selbst nicht oder nur unwesentlich stromführender Bestandteil der Thermosicherung ist, so dass ein elektrischer Stromfluss nur über die Kontaktbrücke erfolgt. Der Stromfluss wird daher ist nicht durch die mechanischen Eigenschaften der Kontaktbrücke beeinflusst.

Da die Kontaktbrücke beidendseitig mit dem jeweiligen Strombahnende kontaktierte Kontaktflächen auf und im Bereich der Kontaktflächen die Schwenkachse liegt, ist die Möglichkeit geschaffen, die Unterbrechungsstelle für den Leitungsfall zu überbrücken, die Kontaktbrücke an den Strombahnenden anzulöten und gleichzeitig auch die Schwenkbarkeit der Kontaktbrücke herzustellen.

Geeigneterweise sind beide Kontaktflächen der Kontaktbrücke mit den Strombahnenden verlötet. Damit ist einerseits eine besonders zuverlässige elektrische Übertragungsfähigkeit des Stromes über die Kontaktbrücke gegeben. Andererseits ist die Kontaktbrücke mechanisch zuverlässig an den Strombahnenden fixiert. Im Falle der Überhitzung schmilzt das Lot im Bereich beider Strombahnenden praktisch zeitgleich, so dass die Kontaktbrücke im Auslösefall ungehindert um die Schwenkachse und in der Ebene der Unterbrechungsstelle ausschwenken kann. Die geschmolzenen Lotverbindungen werden dabei praktisch abgeschert, was eine zuverlässige Unterbrechung der mittels der Thermosicherung bzw. deren Kontaktbrücke gebrückten Unterbrechungs- oder Kontaktstelle sicherstellt.

In einer zweckmäßigen Variante ist die Kontaktbrücke als oder nach der Art eines Stanz-Biegeteils mit einer Anzahl von Abkröpfungen ausgeführt, die einen mittleren erhabenen Brückenabschnitt ausbilden. Dadurch können die gewünschten mechanischen und/oder elektrischen Eigenschaften der Kontaktbrücke in einfacher Weise eingestellt werden. Insbesondere kann die Kontaktbrücke an unterschiedliche Stromstärken adaptiert werden.

Die mit der Erfindung verbundenen Vorteile bestehen insbesondere darin, dass durch eine Auslösung der Thermosicherung in der Ebene der Unterbrechungsstelle eine einfache, günstige und platzsparende Möglichkeit zur Integration der Thermosicherung in den Elektromotor geschaffen ist.

Nachfolgend wird ein Ausführungsbeispiel der Erfindung anhand einer Zeichnung näher erläutert. Darin zeigen:
- Fig. 1: in einer Explosionsdarstellung einen Kühlerlüfter für ein Kraftfahrzeug mit einem bürstenlosen Innenrotormotor mit integrierter Umrichterelektronik,
- Fig. 2: ein Elektronikfach mit einer Elektronik des Elektromotors, mit einer Leiterplatte und einem mit einer Kunststoffumspritzung versehenen Stanzgitter sowie mit einer Thermosicherung,
- Fig.3a und 3b: das Stanzgitter vor bzw. nach der Kunststoffumspritzung inklusive einer mit der Thermosicherung zu brückenden Unterbrechungsstelle in perspektivischer Darstellung,
- Fig. 4: ausschnittsweise in perspektivischer Darstellung die Elektronik mit Thermosicherung,
- Fig. 5a bis 5c: die Thermosicherung mit federbelasteter Kontaktbrücke in Kontaktposition, in einer Schwenkposition bzw. in Auslöseposition.

Einander entsprechende Teile sind in allen Figuren mit den gleichen Bezugszeichen versehen.

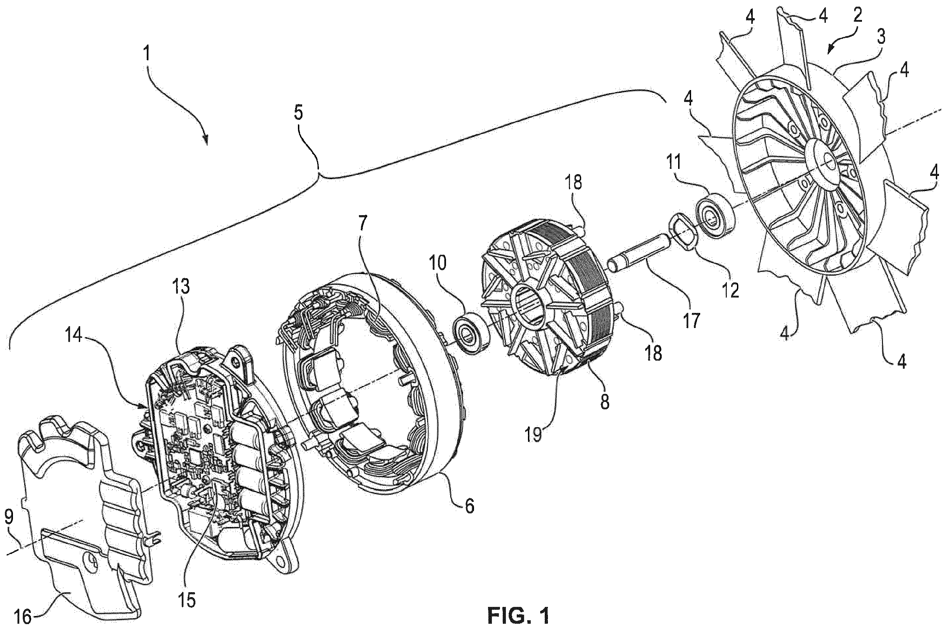

Fig. 1 zeigt in auseinander genommenem Zustand einen Lüfter 1 für den Kühler eines Kraftfahrzeugs. Der Lüfter 1 umfasst ein Lüfterrad 2 mit einer zentralen Kappe 3, um deren Außenumfang (nur ansatzweise dargestellte) Luftleitschaufeln 4 gleichverteilt angeordneten sind. Der Lüfter 1 umfasst des Weiteren einen auch als Lüftermotor bezeichneten Elektromotor 5, mittels welchem das Lüfterrad 2 drehangetrieben ist.

Der Motor 5 wird im Wesentlichen gebildet durch einen Stator 6, der mit einer dreiphasigen Drehfeldwicklung 7 in Form von Spulen bewickelt ist. Der Motor 5 umfasst des Weiteren einen permanent erregten Rotor 8, der im Inneren des Stators 6 um eine Motorachse 9 drehbar gelagert ist. Zur Lagerung des Rotors 8 umfasst der Motor 5 zwei Wälzlager 10 und 11, die von axial entgegengesetzten Seiten am Rotor 8 angreifen. Das Axialspiel des Rotors 8 zwischen den beiden Wälzlagern 10 und 11 ist hierbei durch einen Federring 12 angefedert.

Der Motor 5 umfasst des Weiteren einen etwa scheibenförmigen Motorträger 13. An einer von dem Lüfterrad 2 abgewandten Stirnseite ist in den Motorträger 13 ein Elektronikfach 14 eingebracht, in das eine Umrichterelektronik 15 eingesetzt ist. Zur dichten Verschließung des Elektronikfachs 14 umfasst der Motor 5 einen nachfolgend auch als Gehäusedeckel bezeichneten Elektronikfachdeckel 16.

Der Rotor 8 ist (in nicht näher dargestellter Weise) durch ein Blechpaket gebildet, in das Permanentmagneten zur Erzeugung eines Erregerfeldes eingesetzt sind, wobei das Blechpaket zusammen mit den eingesetzten Permanentmagneten mit einem Kunststoffmantel umspritzt ist. In ähnlicher Weise besteht auch der Stator 6 aus einem Blechpaket, das mit einem Kunststoffmantel umspritzt ist.

Der Motorträger 13 ist insbesondere durch ein einstückiges Druckgussteil aus Aluminium gebildet. Bei dem Elektronikfachdeckel 16 handelt es sich vorzugsweise um ein Spritzgussteil aus Kunststoff.

An seiner Vorderseite ist der Rotor 8 mit vier Schraubdomen 18 versehen, mittels welchen der Rotor 8 im Montagezustand an dem Lüfterrad 2 verschraubt ist. Die Befestigung des Motors 5 und damit des gesamten Lüfters 1 an dem Fahrzeug erfolgt über den Motorträger 13, der hierfür mit drei von seinem Außenumfang abstehenden Schraublaschen 19 versehen ist. Bei dem Motor 5 handelt es sich um einen bürstenlosen, eigen gekühlten Innenrotor- bzw. Innenläufermotor.

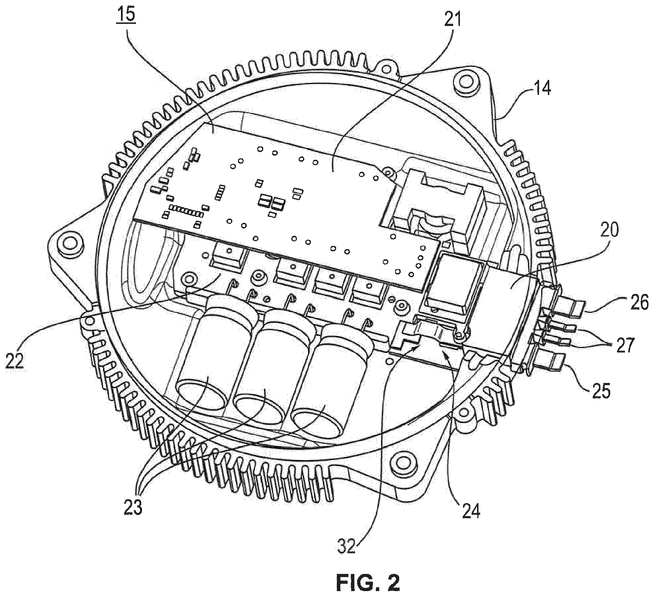

In Fig. 2 zeigt eine perspektivische Darstellung des Elektronikfaches 14 mit eingesetzter Elektronik 15. Die Elektronik 15 umfasst ein umspritztes Stanzgitter 20 und eine mit elektrischen Bauteilen bestückte Platine oder Leiterplatte 21. Der Elektromotor 5 wird von einer Brückenschaltung (B6-Schaltung) betrieben, die in dem umspritzten Stanzgitter 20 implementiert ist. Hierfür weist das umspritzte Stanzgitter 20 eine Anzahl von schaltbaren Halbleiterbauelementen 22 auf, mittels derer drei Phasenwicklungen der Feldwicklung 7 des Elektromotors 5 abwechselnd bestromt werden. Der hierfür verwendete elektrische Strom wird in nicht näher dargestellter Art und Weise von einer Gleichstromquelle bereitgestellt.

Die drei Phasenwicklungen der Feldwicklung 7 des Elektromotors 5 sind in z.B. Dreiecksschaltung über Kondensatoren 23 verschaltet. Mit anderen Worten sind je zwei elektrisch benachbarte Phasenwicklungen miteinander an einer motorseitigen Kontaktstelle elektrisch verbunden, welche wiederum über eine brückenseitige Kontaktstelle mit jeweils einem Brückenzweig der Brückenschaltung elektrisch kontaktiert sind. Die Wicklungen sind aus einem lackierten Kupferdraht hergestellt und mittig zu einer Spule aufgerollt.

Das umspritzte Stanzgitter 20 zeigt zusätzlich zu den Halbleiterbauelementen 22 und den Kondensatoren 23 eine Thermosicherung 24. Die Thermosicherung 24 schützt den Elektromotor 5 vor Überhitzung und Brandgefahr. Überhitzt der Motor 5, so löst die Thermosicherung 24 aus und es kann kein Strom mehr zum oder vom Motor 5 fließen. Anschlüsse 25, 26, und 27 bilden einen Eingangsanschluss und einen Ausgangsanschluss für den Motorstrom bzw. zwei Sensorsignalausgänge, z.B. für die Messungen der Drehgeschwindigkeit (Drehzahl), der Drehrichtung und/oder der Position des Motors 5.

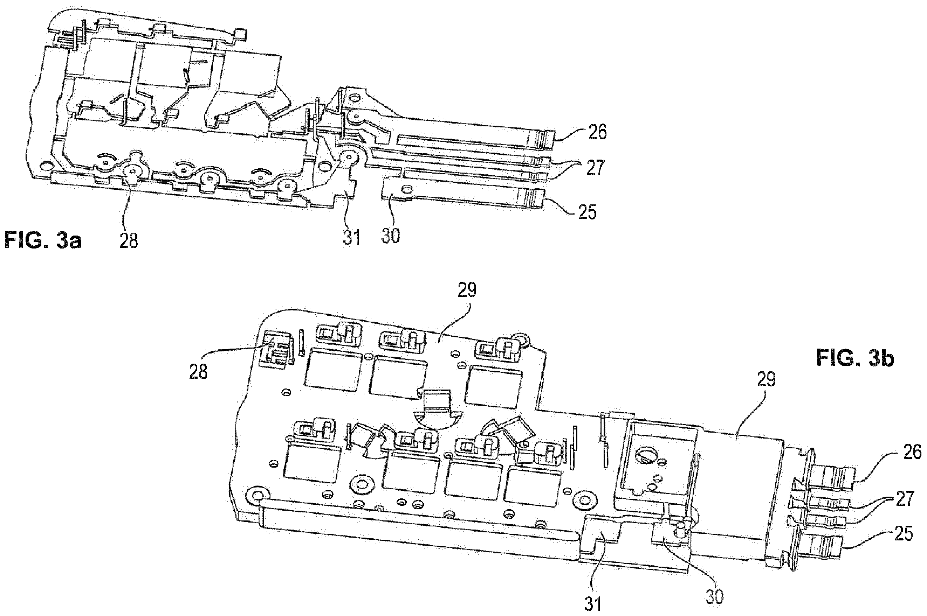

Wie Fig. 2 zusammen mit Fig. 3 zeigt, ist der Eingangsanschluss 25 mit den Halbleiterbauelementen 22 über die Kondensatoren 23 verbunden. Das Stanzgitter 28 (siehe Fig. 3a) realisiert Leiterbahnen und ist mittels einer Kunststoffumspritzung 29 elektrisch isoliert (siehe Fig. 3b). Das Stanzgitter 28 bzw. diese Leiterbahnen führen den Motorstrom I_{M}.

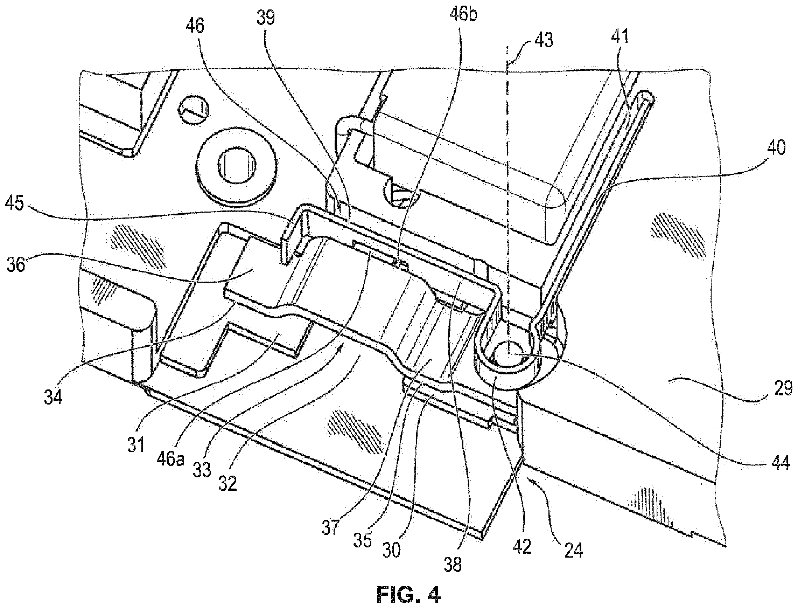

Fig. 4 zeigt die Thermosicherung 24 in vergrößerter Darstellung. Die Thermosicherung 24 verbindet den Motorstrom I_{M} führende Strombahnenden 30, 31 über eine Unterbrechungsstelle 32 des Stanzgitters 28 miteinander. Die Thermosicherung 24 ist aus einer Kontaktbrücke 33 gebildet, welche zwei Kontaktstellen 34, 35 des Stanzgitters 28 miteinander verbindet. Die Kontaktbrücke 33 weist selbst Kontaktstellen 36 und 37 auf, welche mit einer Lötverbindung mit den Kontaktstellen 34, 35 des Stanzgitters 28 verbunden sind. Die Lötstellen kontaktieren die Strombahnenden 30 und 31 elektrisch über die Kontaktbrücke 33 miteinander und verbinden die Kontaktbrücke 33 mechanisch mit den Kontaktstellen 34 und 35 zu einer mechanisch festen Verbindung.

Für die Realisierung der Funktion der Thermosicherung 24 ist ein separates Federelement 38 vorgesehen, welches mit einem ersten Federschenkel 39 die Kontaktbrücke 33 vorspannt und mit einem zweiten Federschenkel 40 in einem Aufnahmefach 41 der Kunststoffumspritzung 29 einliegt. Das Federelement 38 ist in dieser Stellung derart verformt, dass die Federschenkel 39 und 40 nahezu im rechten Winkel zueinander angeordnet sind. Beide Federschenkel 39 und 40 sind über eine Schenkelöse 42 miteinander verbunden.

Das Federelement 38 und die Kontaktbrücke 33 sind weiterhin drehbar um eine Achse 43 gelagert, welche senkrecht auf der Ebene steht, in der die Unterbrechungsstelle 32 liegt. Die Achse 43 ist aus der Umspritzung 29 als Dreh- oder Schwenkzapfen 44 ausgeformt. Dabei ist die Schenkelöse 42 koaxial bezüglich des Zapfens 44 und somit bezüglich der Schwenkachse 43 angeordnet.

Die Kontaktbrücke 33 ist nach Art eines Stanz-Biegeteils mit einer Anzahl von Abkröpfungen ausgeführt, die einen mittleren, erhabenen Brückenabschnitt ausbilden. Das Federelement 38 kann aus Rund- oder auch Flachdraht hergestellt sein. Über das Federelement 38 fließt kein Strom ab, da der Zapfen 44 aus der isolierenden Umspritzung ausgeformt ist und das Federelement 38 daran angelagert ist.

Der erste Federschenkel 39 des Federelements 38 weist schenkelseitig eine Abkröpfung 45 auf, welche die Kontaktbrücke 33 im Auslösefall führt. Darüber hinaus umfasst die Thermosicherung 24 auch ein Führungselement 46 in Form einer Nut-Feder-Verbindung. Dabei führt das Federelement 38 im Auslösefall die Kontaktbrücke 33 während des Schwenkens auf ihrer Schwenkbahn. Die Nut 46a ist dabei an der Kontaktbrücke 33 ausgeformt und die Feder 46b befindet sich am ersten Federschenkel 39 des Federelementes 38.

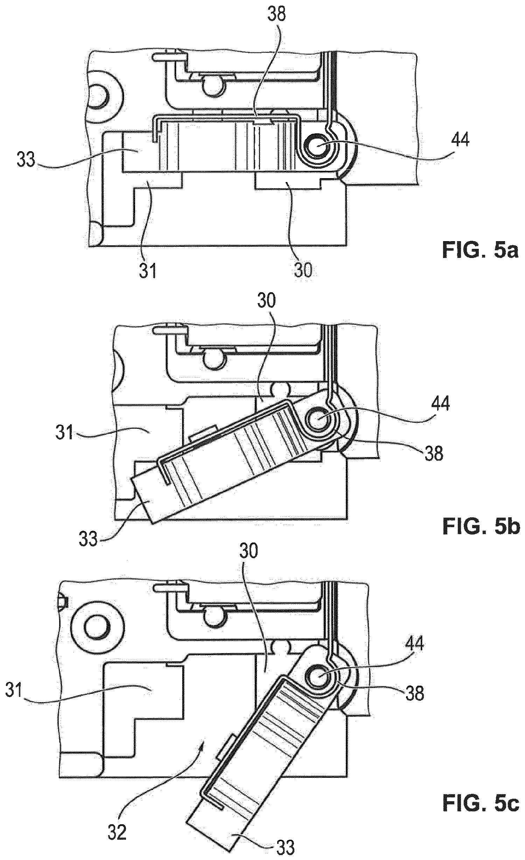

Anhand der Fig. 5a bis 5c ist veranschaulicht, wie im Auslösefall nach Aufschmelzen des Lots der Lötstellen die Kontaktbrücke 33 sowie das Federelement 38 um den Zapfen 44 und somit um die Achse verschwenken. Die Schwenkachse 43 liegt dabei in der Nähe der Kontaktfläche 37. Dort zeigt die Kontaktbrücke 33 eine Bohrung, die vom Zapfen 44 durchsetzt ist.

Die Thermosicherung 24 löst insbesondere bei einer Übertemperatur aus, indem das Lot schmilzt und die Kontaktbrücke in Folge der Federkraft des Federelemente 38 durch eine kombinierte Rotations- und Scherbewegung verschwenkt, so dass die durch die vorgespannte Kontaktbrücke 33 überbrückte Unterbrechungsstelle 32 unterbrochen wird. Die Kontaktbrücke 33 schwenkt im Auslösefall von einer ersten Position (Kontaktposition) in eine zweite Position (Auslöseposition), wobei die Schwenkbewegung um die Schwenkachse 43 und in der Ebene der Unterbrechungsstelle 32 erfolgt.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebene Einzelmerkmale auch auf andere Weise miteinander kombinierbar, ohne den Gegenstand der Erfindung zu verlassen.

### Bezugszeichenliste

- 1: Lüfter
- 2: Lüfterrad
- 3: Kappe
- 4: Luftleitschaufel
- 5: Lüfter-/Motor
- 6: Stator
- 7: Drehfeldwicklung
- 8: Rotor
- 9: Motorachse
- 10: Wälzlager
- 11: Wälzlager
- 12: Federring
- 13: Motorträger
- 14: Elektronikfach
- 15: Umrichter-/Elektronik
- 16: Elektronikfachdeckel
- 17: Achsbolzen
- 18: Schraubdom
- 19: Stirnfläche
- 20: Umspritztes Stanzgitter
- 21: Leiterplatte
- 22: Halbleiterbauelement
- 23: Kondensatoren
- 24: Thermosicherung
- 25: Eingangsanschluss
- 26: Ausgangsanschluss
- 27: Sensorsignalausgänge
- 28: Stanzgitter
- 29: Kunststoffumspritzung
- 30: Erstes Strombahnende
- 31: Zweites Strombahnende
- 32: Unterbrechungsstelle
- 33: Kontaktbrücke
- 34: Erste Kontaktstelle des Stanzgitters
- 35: Zweite Kontaktstelle des Stanzgitters
- 36: Erste Kontaktstelle der Kontaktbrücke
- 37: Zweite Kontaktstelle der Kontaktbrücke
- 38: Federelement
- 39: Erster Federschenkel
- 40: Zweiter Federschenkel
- 41: Aufnahmefach der Kunststoffumspritzung
- 42: Schenkel-/Federöse
- 43: Schwenkachse
- 44: Zapfen
- 45: Abkröpfung
- 46: Führungselement
- 46a: Nut
- 46b: Feder

## Patentansprüche

1. Elektromotor (5) zum Antrieb einer Kraftfahrzeugkomponente (2), insbesondere eines Lüfterrads zur Kühlwasserkühlung, mit einem gegenüber einem Stator (6) drehbar gelagerten Rotor (8) und mit einer Elektronik (15), die ein mit einer Kunststoffumspritzung (29) versehenes Stanzgitter (28) mit einer den Motorstrom (I_{M}) führenden Strombahn mit zwei zueinander beabstandeten Strombahnenden (30, 31) aufweist, die eine mittels einer Thermosicherung (24) gebrückte Unterbrechungsstelle (32) des Stanzgitters (28) bilden, wobei die Thermosicherung (24) eine federbelastete Kontaktbrücke (33) aufweist, welche zwei Kontaktstellen (34, 35) des Stanzgitters (28) miteinander verbindet,
**dadurch gekennzeichnet,**
- **dass** die Kontaktbrücke (33) beidendseitig mit dem jeweiligen Strombahnende (30, 31) kontaktierte Kontaktflächen (36, 37) aufweist, von denen mindestens eine Kontaktfläche (36, 37) mit einer Lötverbindung mit der entsprechenden Kontaktstelle (34, 35) des Stanzgitters (28) verbunden ist,
- **dass** die Kontaktbrücke (33) um eine Schwenkachse (43) schwenkbar gehalten ist, wobei die Schwenkachse (43) im Bereich einer der Kontaktflächen (37) liegt und senkrecht zu derjenigen Ebene verläuft, in der die Unterbrechungsstelle (32) liegt, und
- **dass** im Auslösefall der Thermosicherung (24) bei einer Übertemperatur das Lot schmilzt und die Kontaktbrücke (33) in Folge einer Federrückstellkraft durch eine kombinierte Rotations- und Scherbewegung in der Ebene der Unterbrechungsstelle (32) verschwenkt, so dass die Kontaktbrücke (33) von einer Kontaktposition in eine Auslöseposition verschwenkt und die überbrückte Unterbrechungsstelle (32) unterbrochen wird.

2. Elektromotor (5) nach Anspruch 1,
**dadurch gekennzeichnet,**
**dass** der Kontaktbrücke (33) ein Federelement (38) mit einem ersten Federschenkel (39) und mit einem hierzu zumindest annähernd rechtwinklig verlaufenden zweiten Federschenkel (40) zugeordnet ist.

3. Elektromotor (5) nach Anspruch 2,
**dadurch gekennzeichnet,**
- **dass** die Federschenkel (39,40) über eine Federöse (42) ineinander übergehen, und
- **dass** die Federöse (42) im Montagezustand des Federelementes (38) die Schwenkachse (43) koaxial umgibt.

4. Elektromotor (5) nach Anspruch 2 oder 3,
**dadurch gekennzeichnet,**
- **dass** der erste Federschenkel (39) unter Federvorspannung an der Kontaktbrücke (33) anliegt, und
- **dass** der zweite Federschenkel (40) in einem Aufnahmefach (41) der Kunststoffumspritzung (29) einliegt.

5. Elektromotor (5) nach einem der Ansprüche 2 bis 4,
**dadurch gekennzeichnet,**
**dass** das Federelement (38) und die Kontaktbrücke (33) über ein Führungselement (46) gekoppelt sind.

6. Elektromotor (5) nach Anspruch 5,
**dadurch gekennzeichnet,**
**dass** das Führungselement (46) durch eine Nut (46a) im ersten Federschenkel (39) und eine Feder (46b) an der Kontaktbrücke (33) gebildet ist.

7. Elektromotor (5) nach einem der Ansprüche 2 bis 6,
**dadurch gekennzeichnet,**
**dass** der erste Federschenkel (39) schenkelseitig abgekröpft ist.

8. Elektromotor (5) nach einem der Ansprüche 1 bis 7,
**dadurch gekennzeichnet,**
**dass** die Schwenkachse (43) aus der Kunststoffumspritzung (29) ausgeformt ist.

9. Elektromotor (5) nach einem der Ansprüche 1 bis 8,
**dadurch gekennzeichnet,**
**dass** beide Kontaktflächen (36,37) der Kontaktbrücke (33) mit den Strombahnenden (30,31) verlötet sind.

10. Elektromotor (5) nach einem der Ansprüche 1 bis 9,
**dadurch gekennzeichnet,**
**dass** die Kontaktbrücke (33) als oder nach Art eines Stanz-Biegeteils mit einer Anzahl von Abkröpfungen ausgeführt ist, die einen mittleren, erhabenen Brükenabschnitt ausbilden.

## Claims

1. Electric motor (5) for driving a motor vehicle component (2), particularly a fan wheel for cooling coolant water, comprising a rotor (8) mounted rotatably relative to a stator (6) and comprising an electronics system (15), which has a punched grid (28) provided with a plastic overmold (29) and a current path which conducts the motor current (I_{M}) and has two current path ends (30, 31) spaced apart from one another forming an interruption point (32) of the punched grid (28) that is bridged by a thermal fuse (24), wherein the thermal fuse (24) has a spring-loaded contact bridge (33) which connects two contact points (34, 35) of the punched grid (28) to one another,
**characterized in that**
- the contact bridge (33) has, at both ends, contact surfaces (36, 37) contacted with the respective current path end (30, 31), of which at least one contact surface (36, 37) is connected by means of a soldered joint to the corresponding contact point (34, 35) of the punched grid (28),
- the contact bridge (33) is held pivotably about a pivot axis (43), wherein the pivot axis (43) lies in the region of one of the contact surfaces (37) and extends perpendicularly to the plane in which the interruption point (32) lies, and
- when the thermal fuse (24) trips in the event of an over-temperature, the solder melts and the contact bridge (33) pivots through a combined rotary and shearing movement in the plane of the interruption point (32) as a result of a spring return force, such that the contact bridge (33) pivots from a contact position into a tripped position and the bridged interruption point (32) is interrupted.

2. Electric motor (5) according to Claim 1,
**characterized in that**
the contact bridge (33) is associated with a spring element (38) having a first spring leg (39) and having a second spring leg (40) extending at least approximately at right angles hereto.

3. Electric motor (5) according to Claim 2, **characterized in that**
- the spring legs (39, 40) transition into one another via a spring eyelet (42), and
- in the assembled state of the spring element (38) the spring eyelet (42) surrounds the pivot axis (43) coaxially.

4. Electric motor (5) according to Claim 2 or 3,
**characterized in that**
- the first spring leg (39) bears against the contact bridge (33) under spring preload, and
- the second spring leg (40) lies in a storage compartment (41) of the plastic overmold (29).

5. Electric motor (5) according to one of Claims 2 to 4,
**characterized in that**
the spring element (38) and the contact bridge (33) are coupled via a guide element (46).

6. Electric motor (5) according to Claim 5,
**characterized in that**
the guide element (46) is formed by a groove (46a) in the first spring leg (39) and a spring (46b) on the contact bridge (33).

7. Electric motor (5) according to one of Claims 2 to 6,
**characterized in that**
the first spring leg (39) is bent at the leg end.

8. Electric motor (5) according to one of Claims 1 to 7,
**characterized in that**
the pivot axis (43) is formed from the plastic overmold (29).

9. Electric motor (5) according to one of Claims 1 to 8,
**characterized in that**
both contact surfaces (36, 37) of the contact bridge (33) are soldered to the current path ends (30, 31).

10. Electric motor (5) according to one of Claims 1 to 9,
**characterized in that**
the contact bridge (33) is formed as, or in the manner of a punched and bent part having a number of bends forming a middle raised bridge portion.

## Revendications

1. Moteur électrique (5), destiné à entraîner un composant de véhicule automobile (2), notamment une roue d'un ventilateur destiné à refroidir l'eau de refroidissement, avec un rotor (8) logé de manière rotative par rapport à stator (6) et avec une électronique (15) qui comporte une grille estampée (28) munie d'un enrobage en plastique injecté (29) avec une trajectoire de courant guidant le courant du moteur (I_{M}) comportant deux extrémités de trajectoire de courant (30, 31) écartées l'une de l'autre, qui forment un point d'interruption (32) de la grille estampée (28), ponté à l'aide d'un fusible thermique (24), le fusible thermique (24) comportant un pont de contact (33) soumis à un ressort, lequel relie entre eux deux points de contact (34, 35) de la grille estampée (28), **caractérisé**
- **en ce que** le pont de contact (33) comporte du côté de ses deux extrémités des surfaces de contact (36, 37) contactées par l'extrémité respective de la trajectoire de courant (30, 31), dont au moins une surface de contact (36, 37) est reliée par une brasure avec le point de contact (34, 35) correspondant de la grille estampée (28),
- **en ce que** le pont de contact (33) est maintenu de manière à pouvoir pivoter autour d'un axe de pivotement (43), l'axe de pivotement (43) se situant dans la région de l'une des surfaces de contact (37) et s'écoulant à la perpendiculaire du plan de celle-ci, dans lequel se situe le point d'interruption (32) et
- **en ce que** dans le cas d'un déclenchement du fusible thermique (24) lors d'un excès de température, la brasure fond et sous l'effet de la force de rappel d'un ressort, le pont de contact (33) pivote en un déplacement en rotation et en cisaillement associé dans le plan du point d'interruption (32), de telle sorte que le pont de contact (33) pivote d'une position de contact dans une position de déclenchement et que le point d'interruption (32) ponté soit interrompu.

2. Moteur électrique (5) selon la revendication 1, **caractérisé en ce qu'**au pont de contact (33) est associé un élément à ressort (38) doté d'une première branche de ressort (39) et d'une deuxième branche de ressort (40) s'écoulant au moins approximativement à angle droite par rapport à celle-ci.

3. Moteur électrique (5) selon la revendication 2, **caractérisé**
- **en ce que** les branche de ressort (39, 40) passent l'une dans l'autre par l'intermédiaire d'un oeillet de ressort (42), et
- **en ce que** lorsque l'élément à ressort (38) est monté, l'oeillet de ressort (42) entoure de manière coaxiale l'axe de pivotement (43).

4. Moteur électrique (5) selon la revendication 2 ou 3, **caractérisé**
- **en ce que** la première branche de ressort (39) s'appuie sur le pont de contact (33) sous précontrainte du ressort, et
- **en ce que** la deuxième branche de ressort (40) est insérée dans un compartiment de logement (41) de l'enrobage en matière plastique injectée (29).

5. Moteur électrique (5) selon l'une quelconque des revendications 2 à 4, **caractérisé en ce que** l'élément à ressort (38) et le pont de contact (33) sont accouplés par l'intermédiaire d'un élément de guidage (46).

6. Moteur électrique (5) selon la revendication 5, **caractérisé en ce que** l'élément de guidage (46) est formé par une rainure (46a) dans la première branche de ressort (39) et par un ressort (46b) sur le pont de contact (33).

7. Moteur électrique (5) selon l'une quelconque des revendications 2 à 6, **caractérisé en ce que** la première branche de ressort (39) est coudée du côté de la branche.

8. Moteur électrique (5) selon l'une quelconque des revendications 1 à 7, **caractérisé en ce que** l'axe de pivotement (43) est façonné à partir de l'enrobage en matière plastique injectée (29).

9. Moteur électrique (5) selon l'une quelconque des revendications 1 à 8, **caractérisé en ce que** les deux surfaces de contact (36, 37) du pont de contact (33) sont brasées sur les extrémités du trajet de courant (30, 31).

10. Moteur électrique (5) selon l'une quelconque des revendications 1 à 9, **caractérisé en ce que** le pont de contact (33) est réalisé sous la forme ou à la manière d'une pièce pliée et découpée, avec une pluralité de coudes qui forment un segment de pont central en relief.
